## Europäisches Patentamt
## European Patent Office
## Office européen des brevets

(19)

(11) Numéro de publication: **0 252 793**
**B1**

(12) **FASCICULE DE BREVET EUROPEEN**

(45) Date de publication du fascicule du brevet:
02.11.89

(51) Int. Cl.⁴: **G01L 23/24**, F02D 41/24,
F02P 5/04

(21) Numéro de dépôt: **87401391.5**

(22) Date de dépôt: **19.06.87**

(54) Procédé de mesure de la pression atmosphérique pour un moteur à combustion interne.

(30) Priorité: **24.06.86 FR 8609075**

(43) Date de publication de la demande:
**13.01.88 Bulletin 88/2**

(45) Mention de la délivrance du brevet:
**02.11.89 Bulletin 89/44**

(84) Etats contractants désignés:
**CH DE GB IT LI**

(56) Documents cités:
**DE-A- 3 503 798**
**US-A- 4 377 145**
**US-A- 4 416 239**

**PATENT ABSTRACTS OF JAPAN,**
**vol. 6, no. 97 (M-134)[975], 5 juin 1982; &**
**JP-A-57 32 059 (NIPPON DENSO K.K.) 20-02-1982**
**PATENT ABSTRACTS OF JAPAN,**
**vol. 9, no. 232 (P-389)[1955], 18 septembre 1985 ; &**
**JP-A-60 88 338 (ISUZU JIDOSHA K.K.) 18-05-1985**
**PATENT ABSTRACTS OF JAPAN,**
**vol. 6, no. 162 (P-137)[1040], 25 août 1982; &**
**JP-A-57 79 420 (TOYO KOGYO K.K.) 18-05-1982**

(73) Titulaire: **REGIE NATIONALE DES USINES RENAULT,**
**Boîte postale 103 8-10 avenue Emile Zola,**
**F-92109 Boulogne-Billancourt(FR)**

(72) Inventeur: **Korb, Jean-Pierre, 25, rue Zamenhof,**
**F-92500 Rueil-Malmaison(FR)**
Inventeur: **Bourbonneux, Vincent, 30, rue Jean Maridor,**
**F-75015 Paris(FR)**

ACTORUM AG

## Description

La présente invention concerne un procédé de mesure de la pression atmosphérique pour un moteur à combustion interne, qu'il soit atmosphérique ou à turbocompression.

Actuellement, sur les moteurs atmosphériques ou turbocompressés dont l'allumage et/ou l'injection sont pilotés électroniquement par un calculateur, et pour lesquels ont été élaborées des stratégies de commande de l'allumage et de l'injection basées sur des valeurs de références ou de seuils de pression par rapport à la pression dans le collecteur d'admission, il est nécessaire de connaître la pression atmosphérique pour corriger ces valeurs de référence ou de seuil en fonction précisément de la pression atmosphérique.

Notamment pour les stratégies de commande de l'avance à l'allumage ou de régulation de ralenti, il est nécessaire de connaître la pression atmosphérique pour fixer les seuils de pression dans le collecteur, ces seuils variant en fonction de l'altitude. Concernant des phénomènes physiques caractéristiques d'un moteur, comme les variations de la richesse du mélange air-carburant en fonction de l'altitude, une connaissance de la pression atmosphérique permet de modifier les données d'entrée du calculateur électronique dans le but d'obtenir un fonctionnement optimal du moteur.

Pour mesurer la pression à l'air libre dans un moteur atmophérique ayant un capteur de pression destiné à mesurer la pression dans la collecteur d'admission - mesure nécessaire au calcul de temps d'injection par le calculateur électronique par exemple - on utilise ce capteur de pression et on admet que la pression mesurée dans le collecteur est égale à la pression atmosphérique dans deux ces seulement :

tout d'abord, lors de la mise sous contact correspondant à la mise sous tension du calculateur électronique moteur non tournant et enfin lorsque l'information "pédale d'accélérateur enfoncée au maximum" est détectée avec un régime moteur inférieur à un seuil $N_S$ (1500 tours/mn par exemple).

Dans un moteur turbocompressé, le relevé de la pression atmosphérique par le capteur de pression collecteur ne peut être effectué que sous mise sous contact moteur non tournant, de telle sorte que les corrections des stratégies de commande du calculateur en fonction de l'altitude sont référencées à l'altitude à laquelle le moteur a été mis en route et non à l'altitude où se trouve le véhicule.

Les abrégés JP-A 5 732 059 et JP-A 6 088 338 moutant un capteur avec des commutations pendant la clotax du clapet d'étranglement ou pendant le point mort.

Le but de la présente invention est de mesurer la pression à l'air libre dans certaines conditions.

Un des avantages est que le procédé est peu onéreux et ne nécessite pas une entrée analogique supplémentaire sur le calculateur électronique mais seulement une sortie numérique.

D'autres caractéristiques et avantages de l'invention apparaîtront à la lumière de la description qui suit, illustrée par les figures suivantes :

- la figure 1 : un schéma du dispositif de mesure ;
- la figure 2 : les variations de pression mesurées par le dispositif en fonction des conditions de fonctionnement du moteur.

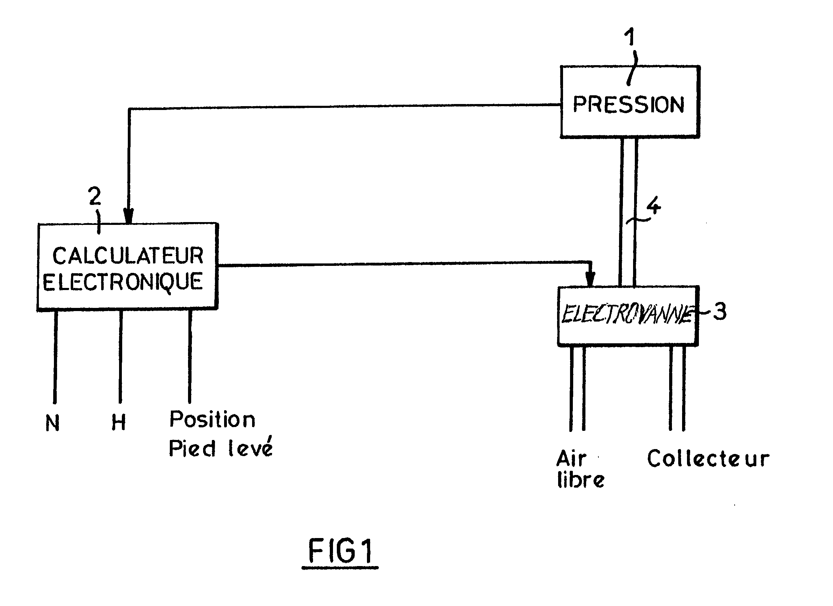

Sur la figure 1 sont représentés les différents éléments du dispositif de mesure de la pression atmosphérique. Ce dispositif comporte un capteur de pression 1 destiné à mesurer la pression $P_c$ dans le collecteur d'admission. Ce capteur est relié au calculateur électronique 2, d'injection par exemple, à qui il délivre l'information électrique "pression collecteur" nécessaire par exemple pour calculer le temps d'injection.

Ce dispositif comporte de plus une électrovanne 3 reliée en série par liaison pneumatique 4 au capteur de pression 1 commutable soit vers le collecteur d'admission d'air du moteur soit vers l'air libre. La commutation de cette électrovanne est commandée par le calculateur électronique 2.

Le fonctionnement de ce dispositif destiné à mesurer soit la pression collecteur soit la pression atmosphérique est le suivant :

Tout d'abord, lors de la mise sous contact du véhicule donc de la mise sous tension du calculateur électronique 2 et moteur non tournant, (information N du nombre de tours moteur par minute donnée au calculateur 2), ce calculateur commande la commutation de l'électrovanne vers l'air libre de telle façon que le capteur de pression 1 mesure la pression atmosphérique.

Ensuite, les instants où le capteur de pression 1 peut mesurer la pression atmosphérique, donc ne pas mesurer la pression dans le collecteur d'admission sans que cela perturbe le bon déroulement des stratégies élaborées par le calculateur, correspondent aux décélérations avec coupure du carburant. Ainsi le calculateur électronique 2 commande la commutation de l'électrovanne vers l'air libre lorsque, d'une part les conditions de décélération sont réunies de sorte que le calculateur délivre l'information de coupure du carburant et d'autre part quand le régime moteur N est supérieur à un seuil donné $N_S$, pour éviter les à-coups en cas de réaccélération alors que l'acquisition de la pression atmosphérique n'est pas terminée : commande la commutation de l'électrovanne vers l'air libre. Lorsque ces deux conditions sont remplies, le relevé de la pression atmosphérique n'est effectué qu'après une temporisation T permettant à la pression d'être bien établie.

Le retour de l'électrovanne 3 en position pression collecteur d'admission a lieu dans deux cas : premièrement lorsque la pression atmosphérique est acquise et deuxièmement lorsque la coupure en décélération est inhibée. Dans le premier cas, après la temporisation permettant l'acquisition de la valeur exacte de la pression atmosphérique, l'électrovanne est commutée au bout d'un temps $T_0$ déterminé. Pour donner un ordre de grandeur, le temps d'acquisition d'une valeur de pression au niveau du capteur 1 après commutation de l'électrovanne 3 est inférieur ou égal à 150 ms. Après commutation, le temps de retour à une valeur exacte de la pression collecteur est de l'ordre de 300 ms.

Le second cas de retour vers la mesure de la pression dans le collecteur d'admission a lieu lorsque la coupure en décélération est inhibée, en particulier lorsque la position pied-levé est supprimée. En effet, dès que le conducteur réaccélère, il redevient nécessaire de mesurer la pression collecteur pour faire fonctionner correctement le moteur, notamment pour calculer le temps d'injection.

Si le conducteur réaccélère avant que l'électrovanne 3 ait commuté le capteur de pression 1 sur le collecteur d'admission, donc avant la fin de la durée $T_o$, le temps d'injection, qui est proportionnel à la pression collecteur, est erroné mais le plus souvent calculé avec une pression supérieure à la pression réelle dans le collecteur. Ceci provoque un enrichissement passager de toutes façons nécessaire après une coupure en décélération.

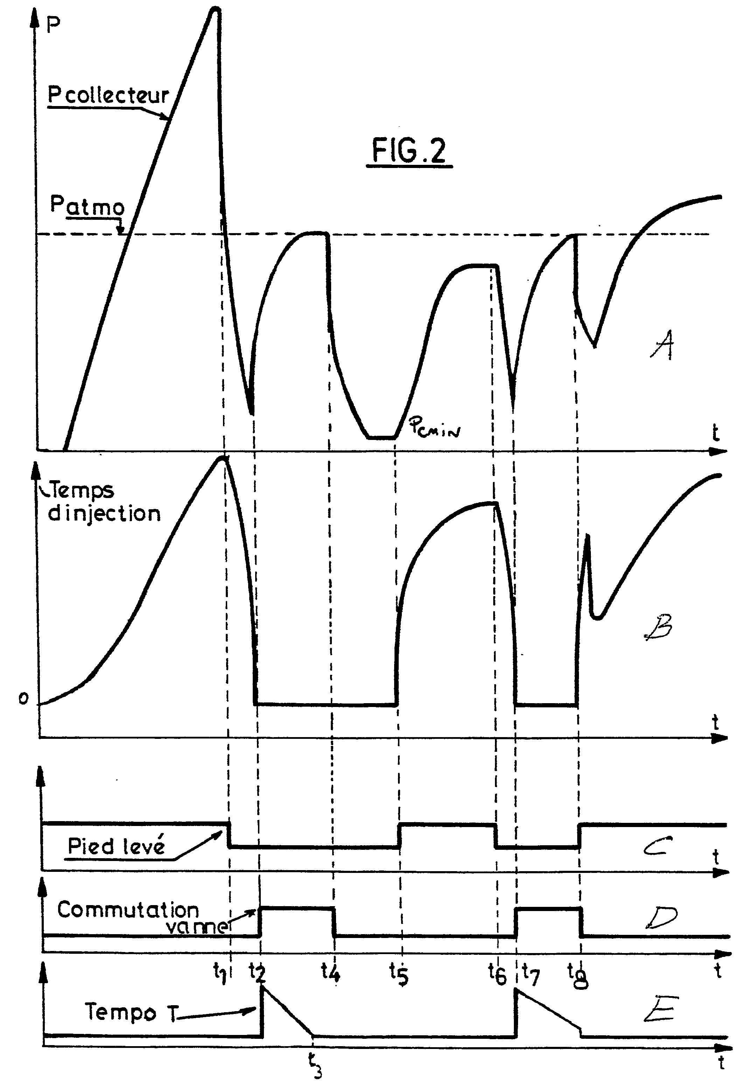

La figure 2 représente les variations de la pression mesurée par le dispositif en fonction d'un exemple de conditions de fonctionnement du moteur (courbe A). La courbe B correspond au temps d'injection $T_i$ calculé par le calculateur électronique et qui est proportionnel à la pression dans le collecteur d'admission d'air du moteur. La courbe C correspond aux commutations de la position "pied levé de la pédale d'accélérateur" : quand la commutation a lieu sur la valeur 1, le conducteur du véhicule accélère et quand est commutée la valeur 0, le conducteur lève le pied de la pédale ce qui provoque une décélération.

Ainsi, pendant la phase d'accélération jusqu'à l'instant $t_1$, la pression mesurée est la pression collecteur, l'électrovanne 3 étant commutée vers le collecteur d'admission. Cette pression monte, donc le temps d'injection $T_i$ croît aussi. A l'instant $t_1$, la position pied levée est détectée, la pression collectuer $P_{coll}$ chute (phase de décélération) en même temps que le temps d'injection.

A l'instant $t_2$, le calculateur commute l'électrovanne (courbe D) vers l'air libre de sorte que la pression mesurée par le capteur est la pression atmosphérique. L'acquisition de cette mesure est considérée comme pouvant se faire au bout d'une temporisation $T$, à l'instant $t_3$ (courbe E). Le retour de l'électrovanne 3 en position pression collecteur a lieu à l'instant $t_4$ après acquisition de la pression atmosphérique. Lorsqu'à l'instant $t_5$, on repasse en phase d'accélération, la pression mesurée dans le collecteur remonte à partir d'une valeur $P_{CMin}$ minimale régnant au moment de la décélération jusqu'à une valeur $P_c$ obtenue à l'instant $t_6$ où est à nouveau détectée une position pied levé - nouvelle phase de décélération -. De $t_6$ à $t_7$, la pression collecteur $P_{coll}$ et le temps d'injection $T_i$ chutent. A l'instant $t_7$ de commutation de l'électrovanne 3 vers l'air libre, la pression mesurée est à nouveau la pression atmosphérique.

A l'instant $t_8$, avant la fin de la commutation de l'électrovanne 3 vers l'air libre, avant même l'acquisition de la pression atmosphérique, le conducteur réaccélère de sorte qu'instantanément cette électrovanne est à nouveau commutée vers le collecteur et le temps d'injection $T_i$ présente un pic correspondant à un enrichissement.

Comme il n'est pas nécessaire de faire une mesure de la pression atmosphérique à chaque décélération on peut programmer dans le calculateur le nombre $N_c$ de décélérations entre deux mesures de pression atmosphérique.

Grâce à ce procédé de mesure de la pression atmosphérique, il est alors possible de corriger les stratégies de fonctionnement d'un moteur turbocompressé en fonction de l'altitude.

## Revendications

1. Procédé de mesure de la pression atmosphérique dans un moteur à combustion interne, mettant en oeuvre un dispositif comportant un capteur de pression (1) destiné à mesurer la pression dans le collecteur d'admission d'air et relié à un calculateur électronique (2), et une électrovanne (3) reliée en série, par liaison pneumatique (4), au capteur de pression (1), commutable soit vers le collecteur d'admission d'air soit vers l'air libre, caractérisé en ce que le calculateur électronique (2) commande la commutation de l'électrovanne (3) :
- vers l'air libre d'une part quand le calculateur électronique (2) est mis sous tension, moteur non tournant, et quand le calculateur (2) détecte une coupure en décélération avec un régime moteur supérieur à un seuil donné, et
- vers le collecteur d'admission d'autre part soit quand l'acquisition de la valeur de la pression atmosphérique est faite au bout d'une temporisation) déterminée soit quand la coupure en décélération est inhibée.

2. Procédé selon la revendication 1, caractérisé en ce que la commutation de l'électrovanne (3) vers l'air libre n'est commandée que toutes les $N_c$ coupures en décélération, $N_c$ étant un entier programmable.

## Patentansprüche

1. Verfahren zur atmosphärischen Druckmessung in einer Brennkraftmaschine mittels einer Vorrichtung, die einen Druckfühler (1) aufweist zur Messung des Drucks im Luftansaugkrümmer, welche mit einem Elektronenrechner (2) verbunden ist und mit einem Elektroventil (3), das mittels einer pneumatischen Verbindung (4) in Serie mit dem Druckfühler (1) verbunden ist und entweder mit dem Luftansaugkrümmer oder mit der Umgebungsluft verbindbar ist, dadurch gekennzeichnet, daß der Elektronenrechner (2) die Umsteuerung des Elektroventils (3) wie folgt vornimmt:
- einerseits in Richtung zur Umgebungsluft, wenn der Elektronenrechner (2) bei nichtdrehendem Motor unter Spannung steht und wenn der Rechner (2) eine Verzögerungsbeendigung bei einer Motordrehzahl größer als ein vorgegebener Schwellwert feststellt und
- andererseits in Richtung des Ansaugkrümmers, wenn die Erfassung des Wertes des atmosphärischen Drucks erfolgt zu Beginn einer vorgegebenen Verzögerungszeit oder wenn der Verzögerungsabfall gesperrt wird.

2. Verfahren nach Anspruch 1, dadurch gekennzeichnet, daß die Umschaltung des Elektroventils (3) in Richtung zur Umgebungsluft nur alle Nc Verzögerungsabfälle erfolgt, wobei Nc ein programmierbarer ganzzahliger Wert ist.

**Claims**

1. A process for measuring atmospheric pressure in an internal combustion engine using an apparatus comprising a pressure sensor (1) intended to measure the pressure in the air intake manifold and connected to an electronic computer (2), and an electically operated valve (3) which is connected in series by a pneumatic connection (4) to the pressure sensor (1) and which can be switched either to the air intake manifold or to the free air, characterised in that the electronic computer (2) controls switching of the electrically operated valve (3):
   - to the free air on the one hand when voltage is applied to the electronic computer (2), with the engine stationary, and when the computer (2) detects a deceleration cut-off with an engine speed higher than a given threshold, and
   - to the intake manifold on the other hand either when acquisition of the value of atmospheric pressure is effected at the end of a given time delay or when the deceleration cut-off effect is inhibited.

2. A process according to claim 1 characterised in that switching of the electrically operated valve (3) to the free air is produced only every Nc deceleration cut-offs, Nc being a programmable integer.

4

FIG1

EP 0 252 793 B1

FIG.2